# EUROPÄISCHE PATENTANMELDUNG

(11) **EP 0 987 448 A1**
(43) Veröffentlichungstag der Anmeldung: **22.03.2000**
(21) Anmeldenummer: 99117700.7
(22) Anmeldetag: 08.09.1999
(51) Int. Cl.: F16B 5/00, B60R 11/00

(54) **Anordnung zur Befestigung einer Baugruppe mit mindestens einer an dieser Baugruppe vormontierten Befestigungsschraube an einem Träger mit einer zugeordneten Öffnung**

(30) Priorität: 17.09.1998 DE 19842592
(71) Anmelder: DaimlerChrysler AG, 70567 Stuttgart (DE)
(72) Erfinder: Baur, Richard, 85276 Pfaffenhofen (DE); Wörle, Engelbert, 86556 Kühbach (DE)
(74) Vertreter: Kolb, Georg

(57) **Zusammenfassung**

Nachteil bisheriger Befestigungsanordnungen ist, daß die vormontierte Befestigungsschraube jederzeit angezogen werden kann, insbesondere auch dann, wenn sie noch nicht oder nur teilweise in den kleineren Abschnitt der Öffnung im Träger eingeführt wurde. Der Kopf der Befestigungsschraube weist dann keine ausreichende Auflagefläche zum Träger auf.

Dies kann erfindungsgemäß verhindert werden, indem durch den an der Unterseite der Baugruppe hervorstehenden Positionierstift die Baugruppe beim Einführen vom größeren in den kleineren Abschnitt der Öffnung deutlich wahrnehmbar so lange von dem Träger beabstandet bleibt, bis der Positionierstift in die dafür vorgesehene Bohrung eindringt, welche so positioniert ist, daß dabei gleichzeitig auch die Schafte der Befestigungsschrauben das Ende der kleineren Abschnitte der jeweiligen Öffnungen erreicht haben.

## Beschreibung

Die Erfindung betrifft ein Anordnung zur Befestigung einer Baugruppe mit mindestens einer an dieser Baugruppe vormontierten Befestigungsschraube an einem Träger mit einer zugeordneten Öffnung.

Aus der DE 297 14 824 U1 ist eine Befestigungsanordnung zu entnehmen, bei der an einem Bauteil mindestens eine Befestigungsschraube vormontiert ist und diese im vormontierten Zustand mit dem Kopf in eine Aufnahmebohrung geführt wird, die eine längliche Öffnung mit einerm ersten Abschnitt aufweist, der derart bemessen ist, daß der Kopf hindurchführbar ist, und einen kleineren Abschnitt aufweist, der den Schaft aufnimmt, wenn der Kopf den Rand der Öffnung hintergreift. Die Befestigungsschrauben weisen dabei sowohl am Kopf als auch am Schaftende Werkzeugangriffsflächen auf, mit denen die Befestigungsschraube einerseits vormontiert, andererseits dann festgezogen wird. An der Unterseite der Baugruppe ist ein hervorstehender Führungsstift vorgesehen, der im einem Langloch im Träger geführt wird, so daß die Bewegungsrichtung der Baugruppe vom ersten in den kleineren Abschnitt damit vorgegeben werden kann.

Nachteil dieser Befestigungsanordnung ist, daß die vormontierte Befestigungsschraube jederzeit angezogen werden kann, insbesondere auch dann, wenn sie noch nicht oder nur teilweise in den kleineren Abschnitt eingeführt wurde. Der Kopf der Befestigungsschraube weist dann keine ausreichende Auflagefläche zum Träger auf. Dies kann bei einer verdeckten Montage am Band oft nicht erkannt werden. Der Führungsstift hat darauf keinen Einfluß, da er im Langloch geführt wird und die Befestigungsschrauben somit angezogen werden können, ohne daß er die Endstellung erreicht.

Aufgabe der Erfindung ist, eine Anordnung anzugeben, durch welches eine ordnungsgemäße Befestigung sichergestellt werden kann. Diese Aufgabe wird durch die kennzeichnenden Merkmale des Patentanspruchs 1 gelöst. Vorteilhafte Weiterbildungen sind den Unteransprüchen zu entnehmen.

Grundgedanke dabei ist, daß durch den an der Unterseite der Baugruppe hervorstehenden Positionierstift die Baugruppe beim Einführen vom größeren in den kleineren Abschnitt der Öffnung deutlich wahrnehmbar so lange von dem Träger beabstandet bleibt, bis der Positionierstift in die dafür vorgesehene Bohrung eindringt, welche so positioniert ist, daß dabei gleichzeitig auch die Schafte der Befestigungsschrauben das Ende der kleineren Abschnitte der jeweiligen Öffnungen erreicht haben.

Die Erfindung wird nachfolgend anhand eines Ausführungsbeispiels und der Figuren näher erläutert. Kurze Beschreibung der Figuren:
- Figur 1: Draufsicht auf eine Baugruppe mit vormontierten Befestigungsschrauben sowie einen Träger mit zwei Öffnungen
- Figur 2: Seitenansicht unmittelbar nach dem Einführen der Köpfe der Befestigungsschrauben durch die Öffnungen im Träger
- Figur 3: Baugruppe mittels der Befestigungsschrauben am Träger festgezogen

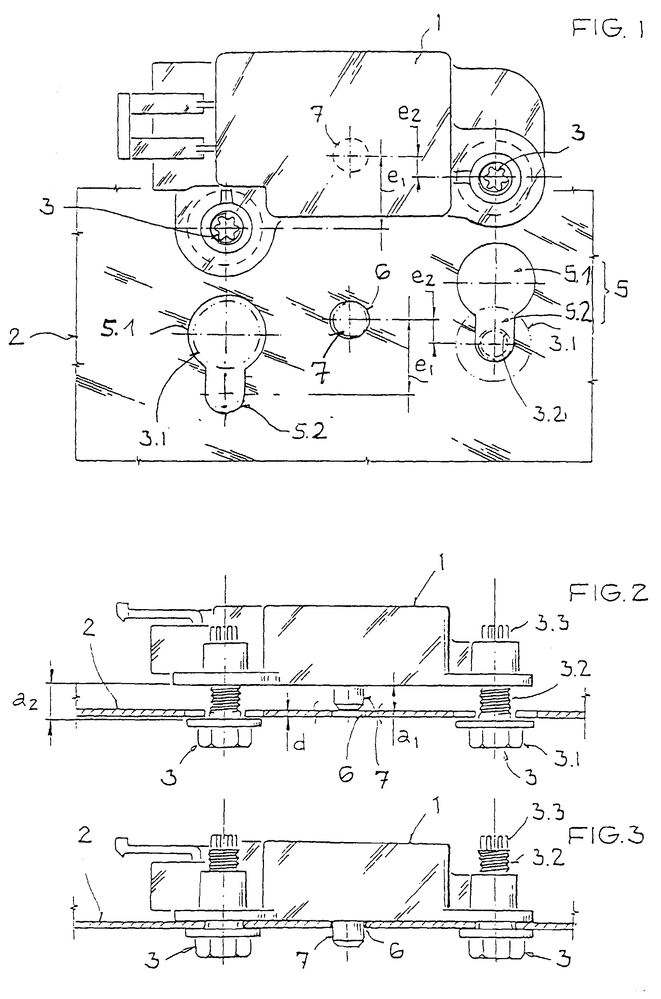

Figur 1 zeigt eine Draufsicht der Baugruppe 1, bspw. eine Kfz-Elektronikbaugruppe, die an einem Träger 2, bspw. einem Karosserieblech, befestigt werden soll. An der Baugruppe 1 sind in diesem Ausführungsbeispiel 2 Befestigungschrauben 3 vormontiert. Die Figuren 2 oder 3 zeigen in einer Seitenansicht die Befestigungsschrauben 3 bestehend aus einem Kopf 3.1 mit ersten Werkzeugangriffsflächen in Form eines Außensechskant, einem Schaft 3.2 mit einem Gewinde und zweiten Werkzeugangriffsflächen am Schaftende 3.3. Das Gewinde kann als selbstschneidenes bzw. selbstfurchendes Gewinde ausgeführt sein. Mittels der ersten Werkzeugangriffsflächen am Kopf 3.1 wird die Befestigungsschraube 3 an der Baugruppe vormontiert. Die Vormontierung der Befestigungsschrauben 3 bedeutet, daß diese mit einem Teil des Schaftes 3.2, also einigen Umdrehungen, in die Baugruppe 1 gedreht sind, jedoch nur so weit, daß noch ein Teil des Schaftes 3.2 freiliegt und der Kopf 3.1 der Befestigungsschraube 3 noch beabstandet von der Baugruppe 1 ist, damit dazwischen mit einer Toleranz (a2) noch der Träger 2 eingeführt werden kann, wie dies in Figur 2 dargestellt ist. Mittels der zweiten Werkzeugangriffsflächen am Schaftende 3.3, die als Außen- oder Innensechskant oder wie in diesem Beispiel als Torx-Abschnitt ausgeführt sind, kann dann die Befestigungsschraube 3 von der Baugruppenoberseite her angezogen werden. Dabei erweist es sich als vorteilhaft, daß die Befestigungsschraube ein Linksgewinde aufweist,damit bei der entgültigen Montage die zweiten Werkzeugangriffsflächen am Schaftende 3.3 dann im vormontierten Zustand (vgl. Fig. 3) mit üblichen Schraubern angezogen werden können, die üblicherweise rechtsdrehend sind. Selbstverständlich sind auch rechtsdrehende Befestigungsschrauben und mit nur einseitiger Werkzeugangriffsfläche grundsätzlich geeignet.

Figur 1 zeigt auch einen Träger 2 mit Öffnungen 5. Die Öffnungen 5 weisen einen ersten Abschnitt 5.1 auf, in den der Kopf 3.1 der Befestigungsschraube 3 eingeführt werden kann, wie dies skizzenhaft in der linken Öffnung 5 der Figur 1 angedeutet ist. Die Öffnung verjüngt sich hin zu einem kleineren Abschnitt 5.2, der so groß ist, daß zwar der Schaft 3.2 der Befestigungsschrauben eingeführt, der Kopf 3.1 dann aber nicht mehr senkrecht zum Träger 2 herausgezogen und die Befestigungsschraube 3 festgezogen werden kann. Der Kopf 3.1 hintergreift dabei den Träger 2, wie dies skizzenhaft in der rechten Öffnung 5 der Figur 1 angedeutet ist.

Außerdem weist die Baugruppe 1 auf ihrer Unterseite einen Positionierungsstift 7 auf, der in Figur 1 nur angedeutet, in den Seitenansichten der Figuren 2 und 3 aber noch besser zu erkennen ist. Die Befestigungsschrauben 3 weisen Abstände e1 und e2 zu dem Positionierungsstift 7 auf, die exakt mit den Abständen e1 und e2 am Träger 2 zwischen einer dort für den Positionierungsstift 7 vorgesehenen Positionierungsbohrung 6 und den Endpositionen der Befestigungsschrauben 3 im jeweils kleineren Abschnitt 5.2 der Öffnungen 5. Die Abstände e1 und e2 sind frei an die Erfordernisse des Ausführungsbeispiels anpaßbar, müssen einzig zwischen Baugruppe 1 und Träger 2 übereinstimmen.

Wie in Figur 2 dargestellt ist, ragt der Positionierstift 7 an der Unterseite der Baugruppe 1 zum Träger 2 hin um einen Abstand a1 hervor, der zumindest um die Dicke d des Trägers 2 kleiner ist als die Länge a2 des freiliegenden Teils des Schafts 3.2, so daß der Kopf 3.1 und zumindest der Ansatz des freiliegenden Teils des Schafts 3.2 in den ersten und zweiten Abschnitt 5.1/5.2 der Öffnung 5 eingeführbar ist. Die Positionierungsbohrung 6 im Träger 2 ist so groß und zu den Öffnungen 5 im Träger 2 derart beabstandet, daß der Positionierstift 7 in die Positionierungsbohrung 6 eindringt, wenn der Schaft 3.2 der Befestigungsschraube 3 bis zum Ende des kleineren Abschnitts 5.2 eingeführt wird. Dann können die Befestigungsschrauben 3 angezogen werden, wie in Figur 3 dargestellt.

Dabei hintergreift jeweils der Kopf 3.1 der Befestigungsschraube 3 großflächig den Rand des kleineren Abschnitts 5.2 der Öffnung 5 im Träger 2, so daß sich eine mechanisch belastbare Befestigung der Baugruppe 1 am Träger 2 ergibt. Von der Montageseite, von der aus die Baugruppe 1 in den Träger 2 eingeführt wurde, ist für den Monteur am Band mit bloßem Auge bisher kaum erkennbar gewesen, ob der Kopf 3.1 der Befestigungsschraube 3 den Träger großflächig hintergreift. Dank des Positionierungsstiftes 7 an der Baugruppe 1 und der Positionierungsbohrung 6 im Träger 2 werden die Befestigungschrauben 3 an der Baugruppe 1 bis ans Ende des kleineren Abschnitts 5.2 der Öffnung 5 geführt, da erst dann daß der Positionierstift 7 in die Positionierungsbohrung 6 eindringt und so die Baugruppe 1 am Träger 2 anliegt, was auch von der Montageseite der Baugruppe her zweifelsfrei erkannt werden kann.

## Patentansprüche

1. Anordnung zur Befestigung einer Baugruppe (1) mit mindestens einer an dieser Baugruppe vormontierten Befestigungsschraube (3) an einem Träger (2) mit einer zugeordneten Öffnung (5),
wobei die Befestigungsschraube (3) einen Kopf (3.1) und einen Schaft (3.2) sowie Werkzeugangriffsflächen aufweist und die Befestigungsschraube nur mit einem Teil des Schaftes (3.2) an der zu befestigenden Baugruppe (1) vormontiert ist, so daß der Kopf (3.1) um den freiliegenden Teil des Schaftes (3.2) von der Baugruppe (1) beabstandet ist,
wobei die Öffnung (5) am Träger (2) einen ersten Abschnitt (5.1) aufweist, in den der Kopf (3.1) und der Schaft (3.2) der Befestigungsschraube (3) hindurchführbar ist, und
ein zweiter, kleinerer Abschnitt (5.2) vorgesehen ist, der mit dem ersten Abschnitt (5.1) verbunden ist, so daß die Befestigungsschraube (3) mit dem freiliegenden Teil des Schafts (3.2) in diesen kleineren Abschnitt (5.2) eingeführbar ist und mit dem Kopf (3.1) an diesem kleineren Abschnitt (5.2) festschraubbar ist,
**dadurch gekennzeichnet, daß** an der Unterseite der Baugruppe zum Träger (2) hin ein Positionierstift 7) um einen Abstand (a1) hervorragt, der kleiner ist als die Länge (a2) des freiliegenden Teils des Schafts (3.2), so daß der Kopf (3.1) und zumindest der Ansatz des freiliegenden Teils des Schaft (3.2) in den ersten und zweiten Abschnitt (5.1/5.2) der Öffnung (5) eingeführbar ist, und
am Träger (2) eine Positionierungsbohrung (6) vorgesehen ist, die so groß und zu den Öffnungen (5) im Träger derart beabstandet ist, daß der Positionierstift (7) in die Positionierungsbohrung (6) eindringt, wenn der Schaft (3.2) der Befestigungsschraube (3) bis zum Ende des kleineren Abschnitts (5.2) eingeführt wird.

2. Anordnung nach Anspruch 1, **dadurch gekennzeichnet, daß** wenigstens zwei Befestigungsschrauben und entsprechende Öffnungen am Träger vorgesehen sind, deren kleinere Abschnitte zu den größeren jeweils parallel und gleichgerichtet sind.
